# EUROPÄISCHE PATENTSCHRIFT

(11) **EP 1 911 892 B1**
(45) Veröffentlichungstag und Bekanntmachung des Hinweises auf die Patenterteilung: **17.06.2009**
(21) Anmeldenummer: 06021468.1
(22) Anmeldetag: 12.10.2006
(51) Int. Cl.: E03B 3/02, E04D 13/08

(54) **Fallrohrfilter**
Downpipe filter
Filtre de tuyau de descente

(43) Veröffentlichungstag der Anmeldung: 16.04.2008
(73) Patentinhaber: Graf Plastics GmbH, 79331 Teningen (DE)
(72) Erfinder: Graf, Otto P., 79331 Teningen (DE)
(74) Vertreter: Grünecker, Kinkeldey, Stockmair & Schwanhäusser Anwaltssozietät

(56) Entgegenhaltungen:
- DE-A1- 10 223 820
- FR-A- 2 675 171
- GB-A- 2 391 182

## Beschreibung

Die Erfindung betrifft einen Fallrohrfilter gemäß Oberbegriff des Patentanspruchs 1.

Der aus DE 42 37 201 C2 und aus dem Katalog R26, Ausgabe 2006, "Regenwasser-Nutzung mit System", Seiten 37, 42 und 43, der Firma Otto Graf GmbH Kunststofferzeugnisse D79331, Teningen, bekannte Fallrohrfilter wird im Fallrohrstrang zwischen kreisrunden Fallrohrenden montiert. Dank der Rundheit der Fallrohrenden lässt sich der Fallrohrfilter in jede beliebige Drehposition bringen, so dass die Überströmverbindung zu einer bezüglich des Fallrohrs bzw. einer Gehäusewand willkürlich platzierten Regenwassertonne gerade und ein starres Rohr oder ein starrer Schlauch sein kann. Die Auffangwanne mit dem Siebeinsatz lässt sich als Unterbaugruppe im Gehäuse variabel positionieren, um die Ausbeute an abgezweigtem Regenwasser einzustellen oder eine Ausbeute (z.B. im Winter) vollständig zu unterbinden. Da das Gehäuse koaxial zur Fallrohrachse und ausladender als das Fallrohr ist, wird hinter dem Fallrohr in Richtung zu einer angrenzenden Gebäudemauer relativ viel Platz benötigt.

Bei dem aus US 1 283 278 A bekannten Fallrohrfilter, der an ein kreisrundes Fallrohrende montiert wird, weist das kastenartige Gehäuse unten neben einem mittigen Schmutzauslass zwei seitliche Wasserauslässe auf. Um das aus dem Fallrohr einströmende Regenwasser zu einem oder zum anderen oder zu beiden Auslässen führen zu können, lässt sich ein im Inneren des Gehäuses angeordnetes Ellbogenrohr um die Fallrohrachse hin- und herverdrehen. Die Fallrohrachse ist im Gehäuse außermittig angeordnet. Das Gehäuse wird breitseitig parallel zur Gebäudemauer installiert.

Aus GB 2 391 182 A ist ein Fallrohrfilter bekannt, bei dem die Filtereinrichtung oder das Sieb verdrehbar im Fallrohrfilter aufgenommen ist.

Aus architektonischen oder anderen Gründen werden vermehrt viereckige, d.h. quadratische oder rechteckige Fallrohre vorgesehen. Herkömmliche Fallrohrfilter lassen sich mit viereckigen Fallrohren nicht ohne weiteres kombinieren. Selbst wenn die Gehäuse der beiden oben erwähnten, bekannten Fallrohrfilter zur Montage an viereckigen Fallrohren modifiziert würden, wäre dann nur eine einzige vorbestimmte Position des Auslasses für abgezweigtes Regenwasser möglich, da sich das Gehäuse wegen der Unrundheit des Fallrohrs nicht mehr verdrehen ließe. Dies würde bedeuten, dass zur Regenwasser-Nutzung eine Regenwassertonne entweder direkt vor dem Fallrohrfilter und entfernt von der Hausmauer aufgestellt werden müsste, was gegebenenfalls ein störendes Erscheinungsbild hervorrufen könnte, oder zu einer seitlich möglichst nahe an der Gebäudewand platzierten Regenwassertonne eine strömungsungünstig und verschmutzungsanfällig gekrümmt und ausladend verlegte Überströmverbindung installiert werden müsste.

In anderen Einsatzfällen ist es beispielsweise erforderlich, vor allem Laub aus dem Regenwasser im Fallrohrstrang abzusondern und auszuscheiden, weil z.B. Regenwasser in eine Versickerungsanlage geleitet wird. Ein Laubabscheider für ein kreisrundes Fallrohr ist aus dem erwähnten Prospekt R26, S. 43, bekannt.

Der Erfindung liegt die Aufgabe zugrunde, einen Fallrohrfilter der eingangs genannten Art, jedoch für viereckige Fallrohe anzugeben, mit dem unabhängig von der Positionierung beispielsweise einer Regenwassertonne in Bezug auf das Fallrohr bzw. die Gebäudewand eine gerade Überströmverbindung vorgesehen werden kann. Als Unteraufgabe soll der Fallrohrfilter wahlweise zur Laubabscheidung in einem viereckigen Fallrohrstrang brauchbar sein.

Die gestellte Aufgabe wird mit den Merkmalen des Patentanspruchs 1 gelöst.

Da sich der Auslass mit dem Gehäusezwischenabschnitt zu den Gehäuseteilen um die Gehäuseachse verdrehen lässt, kann nach Montage des Fallrohrfilters an den viereckige Fallrohrenden der Auslass in jede Position gebracht werden, um mit der willkürlich platzierten Regenwassertonne über eine möglichst gerade Überströmverbindung verbunden zu werden. Diese Überströmverbindung kann günstig aus einem starren Rohr oder Schlauch gebildet werden. Dies bedeutet, dass bei der Montage des Fallrohrfilters keine Rücksicht darauf genommen zu werden braucht, wo später die Regenwassertonne platziert wird, bzw., es auch möglich ist, bei bereits montiertem Fallrohrfilter die Regenwassertonne umzustellen, da sich der Auslass stets nach der Platzierung der Regenwassertonne ausrichten lässt. Da nur der Gehäusezwischenabschnitt mit dem Auslass verdreht wird, hingegen die anderen, für die Wasserführung und Schmutz- bzw. Laubabsonderung verantwortlichen Innenkomponenten des Fallrohrfilters diese Drehung nicht mitzumachen brauchen, werden durch das Verdrehen des Gehäusezwischenabschnitts die Durchströmverhältnisse und die Ausbeute nicht nennenswert verändert.

Zweckmäßig hat das Gehäuse einen im Wesentlichen kreisrunden Außenumriss, dessen Mittelachse die Gehäuseachse ist. Die im Wesentlichen fluchtenden Montageanschlüsse für die viereckigen Fallrohrenden sind außermittig angeordnet, vorzugsweise bis innen oder außen angrenzend an den Außenumriss. Diese Bauweise führt nicht nur zu einem sehr gefälligen Erscheinungsbild des Fallrohrfilters, sondern beansprucht keinen oder nur minimalen Bauraum zwischen dem Fallrohr und der angrenzenden Gehäusewand. Es kann dadurch der Fallrohrfilter auch installiert werden, wenn sich das Fallrohr beispielsweise in einer Vertiefung der Gebäudewand befindet.

Die oberen und unteren Gehäuseteile sind bei einer zweckmäßigen Ausführungsform jeweils als Kappe ausgebildet, in die ein viereckiger außen liegender Einsteckkasten für das Fallrohrende integriert ist. Ferner besitzt jeder Gehäuseteil eine innen liegende kreisrunde Fassung für ein Ende des Gehäusezwischenabschnitts, der, vorzugsweise, im Wesentlichen zylindrisch ist. Trotz der Unrundheit der Einsteckkasten und damit der drehfesten Festlegung der Montierpositionen der oberen und unteren Gehäuseteilen an den Fallrohrenden lässt sich der Gehäusezwischenabschnitt in den kreisrunden Fassungen bequem verdrehen.

Der Fallrohrfilter lässt sich als andere Ausführungsform zur Laubabscheidung einsetzen oder modifizieren, indem zwischen die oberen und unteren Gehäuseteile wahlweise ein Gehäusezwischenabschnitt eingesetzt ist bzw. wird, der im Hinblick auf die Aufgabe der Laubabscheidung konzipiert ist. Dies bedeutet, dass der Fallrohrfilter entweder grundsätzlich zur Laubabscheidung oder zum Abzweigen von Regenwasser installiert wird, oder wahlweise bei Bedarf modifiziert wird. Bei Verwendung des Gehäusezwischenabschnittes zum Abscheiden von Laub wird das aus dem Fallrohrfilter unten ablaufende, gereinigte Regenwasser beispielsweise in eine Versickerungsanlage geleitet, deren ordnungsgemäße Funktion durch zu viel eingeschwemmtes Laub gefährdet würde.

Ein wichtiger Gedanke besteht ferner darin, dass der jeweilige Einsteckkasten als wählbar umbaubarer Adapter ausgebildet ist, der eine Anpassung an unterschiedliche Größen viereckiger Fallrohrenden ermöglicht. Zweckmäßig ist ein in Maximalgröße der viereckigen Fallrohrenden ausgebildeter Schacht vorgesehen, in den sich Adapterteile einsetzen oder aus dem sich diese entnehmen lassen, um die Anpassung an die jeweils vorliegende Größe der Fallrohrenden vornehmen zu können.

Herstellungstechnisch günstig ist der Auslass für abzuzweigendes Wasser ein im Wesentlichen zur Gehäuseachse senkrechter, im Inneren des Gehäusezwischenabschnitts bis zu einem oben offenen Behälter verlängerter Rohrstutzen. In diesem Behälter wird ein Bodenauslass der Auffangwanne drehbar aufgenommen, so dass sich der Behälter mit dem Gehäusezwischenabschnitt verdrehen lässt, während die Auffangwanne ihre grundsätzliche Position im Gehäuse nicht verändert. Hierbei wird der Behälter im Gehäusezwischenabschnitt in etwa zentrisch positioniert, damit er an allen Seiten von dem abgeleiteten Schmutz und nicht abgezweigten Regenwasser umströmt werden kann, und die relative Drehung des Gehäusezwischenabschnitts zulässt. Zur Positionierung des Behälters kann eine Querstrebe des Gehäusezwischenabschnitts beitragen. Der Schmutz, und insbesondere Lauf werden über das untere Fallrohrende , z.B. in das Kanalisationssystem abgeführt.

Um die Auffangwanne sicher zu positionieren, ist sie mit einem Halteflansch versehen, der im Bereich der Fassung zwischen dem oberen Gehäuseteil und dem Gehäusezwischenabschnitt so festgelegt wird, dass die Auffangwanne gegen Verdrehen im oberen Gehäuseteil gesichert wird.

Um die Ausbeute variieren zu können bzw. im Winter kein Regenwasser abzuzweigen, ist zweckmäßig zwischen dem Auslass der Auffangwanne und dem Behälter eine um die Gehäuseachse drehbare Absperrhülse eingesetzt. Diese Absperrhülse lässt sich, zweckmäßig von außerhalb des Fallrohrfilters, manuell betätigen, um die Ausbeute zu variieren oder voll abzusperren, ohne das Gehäuse zerlegen oder demontieren zu müssen.

Dabei kann die Absperrhülse in Umfangsrichtung aufeinanderfolgend wenigstens einen Absperrabschnitt und wenigstens einen Durchgang aufweisen. Eine von der Absperrhülse abstehende Handhabe ist z.B. von außen zugänglich und ermöglicht die bequeme Drehverstellung der Absperrhülse.

Bei einer zweckmäßigen Ausführungsform ist im Außenumriss des Gehäusezwischenabschnitts eine in Umfangsrichtung begrenzte, unterseitig offene Vertiefung eingeformt, und greift ein Handgriff an der Handhabe von unten in die Vertiefung ein. Dieser Handgriff ist an der Außenseite des Gehäusezwischenabschnitts zugänglich. Ferner signalisiert der Handgriff sofort seinen Zweck, nämlich die Absperrhülse von außen verstellen zu können. Alternativ könnte die Handhabe direkt durch einen Schlitz im Gehäusezwischenabschnitt nach außen geführt werden. Die unten offene Vertiefung lässt Luft eintreten, um die Durchströmverhältnisse zu verbessern.

In der Absperrhülse sind der Durchgang und der Absperrabschnitt in Umfangsrichtung innerhalb eines Bogenmaßes von z.B. etwa 60° angeordnet. Das Bogenmaß der Vertiefung in dem Gehäusezwischenabschnitt ist so gewählt, dass sich der Handgriff in der Vertiefung über diese z.B. etwa 60° verdrehen lässt. Auf diese Weise wird bereits vom Hersteller vorgegeben, wie die Absperrhülse korrekt zu betätigen ist, damit sie entweder den vollen Durchgangsquerschnitt öffnet, oder in der anderen Grenzstellung eine vollständige Absperrung bewirkt.

Zur Gestaltfestigkeit kann die den unteren Gehäuseteil bildende Kappe die Fassung begrenzende Rippen aufweisen. Auf diesen Rippen kann der untere Rand des Gehäusezwischenabschnitts aufstehen oder sogar in durch die Rippen begrenzte Hinterschneidungen eingreifen, so dass hier eine saubere Drehführung und Zentrierung gegeben sind.

Die Auffangwanne besitzt einen bis zum Halteflansch schräg ansteigenden Öffnungsrand, um eine möglichst große Auffangfläche zu definieren. Auf dem Öffnungsrand lässt sich ein Sieb- oder Filterkörper aufsetzen und darauf durch eine Steck- oder Schnappverbindung entnehmbar positionieren.

Wird der Fallrohrfilter zur Laubabscheidung genutzt, ist zweckmäßig im entsprechend konzipierten Gehäusezwischenabschnitt der Auslass ein relativ zur Gehäuseachse schräg abfallender Rohrstutzen um eine Durchgangsöffnung der Wand des Gehäusezwischenabschnitts. Der Rohrstutzen hat, vorzugsweise, in etwa die gleiche Schräge wie ein Öffnungsrand der Auffangwanne im Gehäuse. Um zu verhindern, dass von der Sieb- oder Filterfläche abgespülte Verunreinigungen, insbesondere Laub, zum unteren Ablassende des Fallrohfilters gelangt, ist, vorzugsweise in etwa parallel zum Öffnungsrand, ein den Zwischenraum zwischen der Wand des Gehäusezwischenabschnitts und der Auffangwanne überbrückender, schräger Körper vorgesehen, der zur Durchgangsöffnung führt. Auf dem Leitkörper wird abgespültes Laub in den Auslass geführt. Die Auffangwanne fängt nur gereinigtes Regenwasser auf und leitet dies zum unteren Auslassende des Gehäuses. Der Leitkörper wird so in das Gehäuse integriert, dass der Gehäusezwischenabschnitt um die Gehäuseachse relativ zu den oberen und unteren Gehäuseteilen zumindest begrenzt verdrehbar ist, um den Auslass in eine gewünschte Drehposition einstellen zu können, die von der Position des viereckigen Fallrohrs unabhängig ist.

Zweckmäßig ist zumindest ein Teil des Leitkörpers oder der gesamte Leitkörper einstückig im Gehäusezwischenabschnitt angebracht.

Bei einer alternativen Ausführungsform kann zumindest ein Teil des Leitkörpers oder der gesamte Leitkörper an der Auffangwanne angebracht sein, um den Gehäusezwischenabschnitt mit dem Auslass relativ zur Auffangwanne und dem Leitkörper zumindest in begrenztem Ausmaß verdrehen zu können.

Die Durchgangsöffnung zur Laubabscheidung kann in Querrichtung weiter als in Hochrichtung sein, vorzugsweise mit einer Querschnittsgröße größer als eine menschliche Hand. Dies sichert nicht nur das Abführen von Laub bei starkem Laubanfall ohne die Gefahr einer Verstopfung des Auslasses, sondern ermöglicht auch das fallweise Eingreifen mit der Hand von außen.

Zweckmäßig ist ein Bodenauslass der Auffangwanne, vorzugsweise drehbar, in einem zentrisch im Gehäusezwischenabschnitt vorgesehenen Rohrstutzen aufgenommen, damit die Auffangwanne stabil abgestützt ist. Der Rohrstutzen kann auf wenigstens einer Querstrebe des Gehäusezwischenabschnitts angeordnet und, vorzugsweise, einstückig mit dem Gehäusezwischenabschnitt ausgebildet sein.

Die Komponenten des Fallrohrfilters sind zweckmäßig Kunststoff-Spritzgussteile.

Anhand der Zeichnungen wird eine Ausführungsform des Erfindungsgegenstandes erläutert.
Es zeigen:
- Fig. 1: eine Perspektivansicht einer Ausführungsform eines Fallrohrfilters zum Abzweigen von Wasser,
- Fig. 2: eine Explosionsdarstellung des Fallrohrfilters mit seinen Komponenten,
- Fig. 3: einen Perspektivschnitt zur Verdeutlichung des Funktionsprinzips des Fallrohrfilters,
- Fig. 4: einen Vertikalschnitt des Fallrohrfilters,
- Fig. 5: eine Draufsicht auf den Fallrohrfilter von Fig. 4,
- Fig. 6: eine Explosionsdarstellung einer anderen oder modifizierten Ausführungsform eines Fallrohrfilters zum Abscheiden vorwiegend von Laub, und
- Fig. 7: einen Achsschnitt des Fallrohrfilters von Fig. 6.

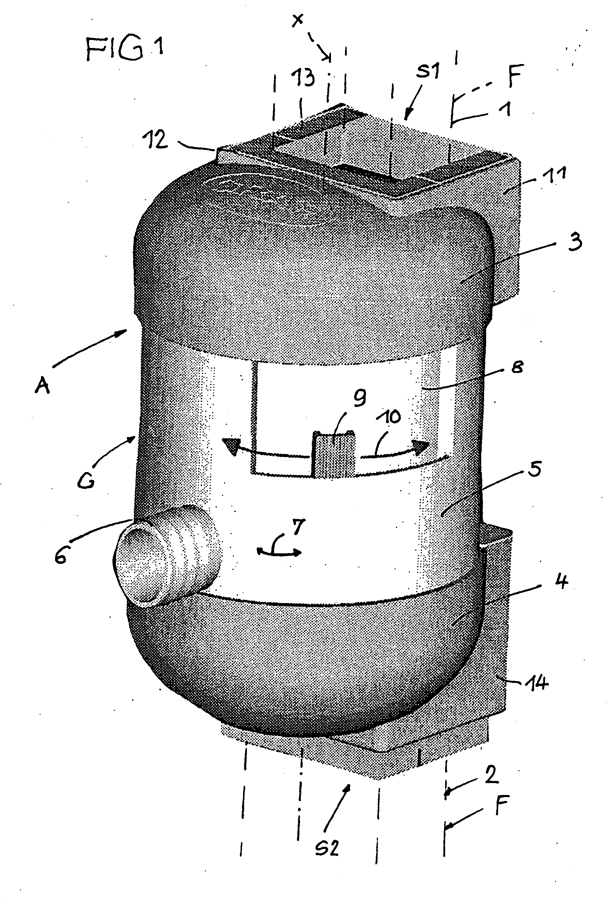

Ein in Fig. 1 in einer Gesamtansicht gezeigter Fallrohrfilter A dient beispielsweise zum Abzweigen von Regenwasser aus einem Fallrohr F, wobei das abgezweigte Regenwasser von Verunreinigungen wie Laub weitestgehend entledigt mit einer wählbaren Ausbeute über einen Auslass 6 zu einem nicht gezeigten Regenwassersammelbehälter gebracht wird, um Regenwasser systematisch einer weiteren Nutzung zuzuführen. Das Fallrohr F hat einen viereckigen Querschnitt, z. B. einen quadratischen oder rechteckigen Querschnitt. Der Fallrohrfilter A ist zweckmäßig, wie gezeigt, in eine Unterbrechung des Fallrohrs F zwischen einem oberen Fallrohrende 1 und einem unteren Fallrohrende 2 montiert. Alternativ könnte der Fallrohrfilter A auch nur am oberen Fallrohrende 1 montiert sein, und durchlaufendes Regenwasser nach unten in die Kanalisation oder dgl. ablassen.

Der Fallrohrfilter A weist ein in der gezeigten Ausführungsform im Wesentlichen zylindrisches Gehäuse G mit einem Oberteil 3, einem Unterteil 4, jeweils als Kappe gestaltet, und einem Gehäusezwischenabschnitt 5 auf, der relativ zu den Gehäuseteilen 3, 4 und damit dem Fallrohr F um eine Gehäuseachse X in Richtung eines Doppelpfeiles 7 hin- und herdrehbar ist, um die Position des Auslasses 6 an die Platzierungsposition der nicht gezeigten Regenwassertonne oder eines anderen Sammelbehälters anzupassen. Somit lässt sich unabhängig vom Fallrohr F zwischen dem Auslass 6 und dem Sammelbehälter eine strömungsgünstige und verschmutzungs-unanfällige gerade und zweckmäßig steife Überströmverbindung herstellen, beispielsweise mittels eines Rohres oder Schlauches.

Die Gehäuseteile 3, 4 besitzen jeweils einen Montieranschluss S1 bzw. S2 für ein Fallrohrende 1 bzw. 2. Der Montieranschluss S1, S2 besteht aus einem in den Gehäuseteil 3, 4 integrierten Einsteckkasten 11, 14 mit einem z.B. in der maximalen Größe eines viereckigen Fallrohrs ausgebildeten, viereckigen Schacht 12 im Oberteil 3 und einem entsprechenden Schacht im Unterteil 4, wobei der Schacht im Unterteil 4 mit einem Steckansatz 12a in Vierkantform ausgebildet sein kann, der sich außen über oder innen in das untere Fallrohrende 2 stecken lässt. Der obere Gehäuseteil 3 weist einen unteren Stülprand 15 auf, der mit dem Einsteckkasten 11 verschnitten ist.

Um denselben Fallrohrfilter A bei verschieden dimensionierten viereckigen Fallrohren F verwenden zu können, sind die Montieranschlüsse S1, S2 als Adapter ausgebildet, d.h., sind beispielsweise herausnehmbare Adapterteile 13, 13a im jeweiligen Schacht 12 bzw. 12a vorgesehen. Für ein Fallrohr F mit der maximalen Abmessung werden die Adapterteile 13, 13a entfernt.

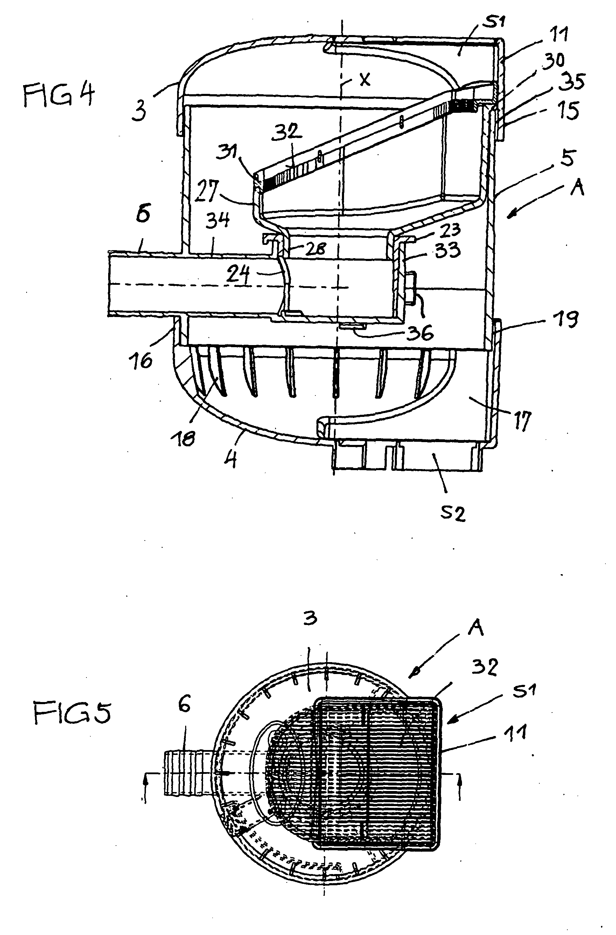

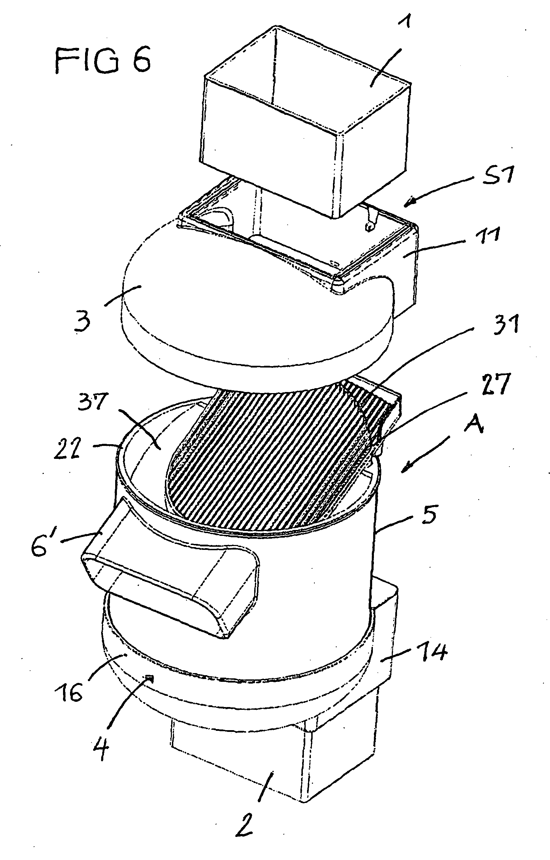

Gemäß Fig. 1 und Fig. 5 ist der jeweilige Montieranschluss S1, S2 gegenüber der Gehäuseachse X außermittig angeordnet, derart, dass die äußerste Kontur des Einsteckkastens 11 bzw. 14 gerade noch innerhalb des Umrisses des Gehäuses G liegt oder mit dem Umriss abschließt oder sogar (Fig. 6) geringfügig über den Umriss nach außen vorsteht. Dadurch wird bei montiertem Fallrohrfilter hinter dem Fallrohr kein Bauraum für den Fallrohrfilter benötigt.

Der Auslass 6 für abzuzweigendes Wasser befindet sich im unteren Teil des Gehäusezwischenabschnitts 5. Bei der gezeigten Ausführungsform ist oberhalb des Auslasses 6 in der Außenkontur des Gehäusezwischenabschnittes 5 eine Vertiefung 8 eingeformt, die sich über einen begrenzten Umfangsabschnitt erstreckt und die unten zum Inneren des Gehäuses offen ist. In Fig. 1 ist in der Vertiefung 8 ein Handgriff 9 platziert, der sich in Richtung eines Doppelpfeiles 10 innerhalb der Begrenzung des Vertiefung 8 verstellen lässt, und dessen Zweck später erläutert wird.

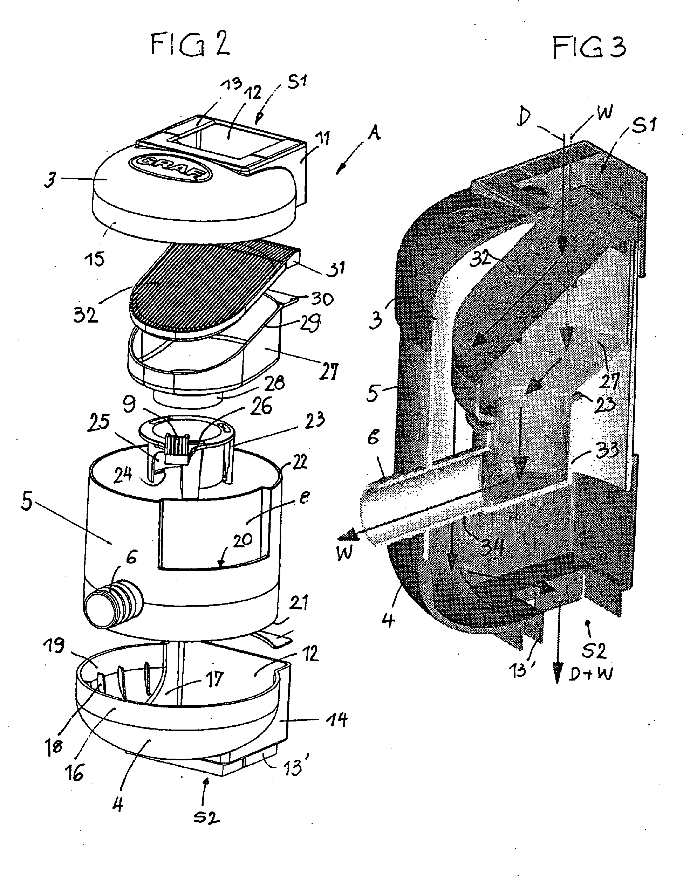

In der Explosionsdarstellung in Fig. 2 sind die einzelnen Komponenten des Fallrohrfilters A erkennbar, die zweckmäßig alle oder zumindest überwiegend Kunststoff-Spritzgussteile sind.

Im Gehäuse G ist unterhalb des Montieranschlusses S ein Filter- oder Siebkörper 31 eingebaut, der eine schräg abfallende Siebfläche 32 definiert. Der Siebkörper 31 wird auf einem Öffnungsrand 29 einer Auffangwanne 27 festgelegt, beispielsweise verschnappt. Die Auffangwanne 27 weist hierfür einen zu einem Halteflansch 30 schräg ansteigenden Öffnungsrand 29 auf. In etwa mittig bezüglich der Gehäuseachse X führt vom Grund der Auffangwanne 27 ein stutzenartiger Auslass 28 nach unten.

Der Auslass 28 wird, wie Fig. 4 in der Schnittdarstellung zeigt, von oben in eine Sperrhülse 23 eingesteckt, die in ihrer Außenwandung einen Durchgang 24 und angrenzend an den Durchgang 24 einen Sperrabschnitt 25aufweist. Ferner führt von der Oberseite der Sperrhülse 23 eine Drehhandhabe 26 nach außen, an der bei der gezeigten Ausführungsform der in Fig. 1 gezeigte Handgriff 9 angebracht ist, der von unten in die Vertiefung 8 eingesteckt und von außen zugänglich ist.

Der Gehäusezwischenabschnitt 5 ist bei der gezeigten Ausführungsform mit oberen und unteren Enden 22, 21 im Wesentlichen zylindrisch ausgebildet. Die Enden 22, 21 werden in kreisrunde Fassungen 35 (Fig. 4) für das obere Ende 22 und 19 (im unteren Gehäuseteil 4) so eingesetzt, dass der Gehäusezwischenabschnitt 5, wie erwähnt, in Richtung des Doppelpfeiles 7 relativ zu den oberen und unteren Gehäuseteilen 3, 4 um die Gehäuseachse X drehbar ist. Diese Drehung führt, zumindest teilweise auch die Sperrhülse 23 aus, während die anderen Komponenten stationär montiert sind. Die Vertiefung 8 im Gehäusezwischenabschnitt 5 ist unten bei 20 geöffnet, um den Handgriff 9 von unten her einführen zu können, und um Luft ein- oder ausströmen zu lassen. Im Falle einer Verstopfung oder eines Rückstaus kann auch Wasser dort austreten.

Der untere Gehäuseteil 4 weist einen Stülprand 16 auf, in welchem die kreisrunde Fassung 19 für das Ende 21 ausgebildet und beispielsweise durch Rippen 18 begrenzt ist, so dass die Fassung 19 gegebenenfalls für das Ende 21 hinterschnitten ist. Ferner ist zumindest eine in etwa vertikal verlaufende Leitwand 17 im Schacht 12a des unteren Einsteckkastens 14 gezeigt.

Der Fallrohrfilter wird entsprechend Fig. 1 bzw. Fig. 4 zusammengebaut und an den Fallrohrenden 1, 2 montiert, um dann gemäß Fig. 3 wie folgt zu funktionieren:

In Fig. 3 läuft durch den Montieranschluss S1 Wasser W versetzt mit Verunreinigungen D wie z.B. Laub direkt auf die Siebfläche 32. Entlang der schräg abfallenden Siebfläche 32 werden die Verunreinigungen D weitestgehend zurückgehalten und, wie durch den Pfeil angedeutet, weggespült, so dass sie durch den freien Zwischenraum zwischen dem Gehäusezwischenabschnitt 5 und der Auffangwanne 27 in den unteren Gehäuseteil 4 strömen, ehe sie das Gehäuse durch den unteren Montieranschluss S2, gegebenenfalls vermischt mit Wasser W, abfließen. Durch die Siebfläche 32 hindurch gegangenes Wasser wird von der Auffangwanne 27 schräg nach unten und durch den Auslass 28 und durch die Sperrhülse 23 in einen oben offenen, in der gezeigten Ausführungsform zylindrischen Behälter 33 geleitet, der über eine Verlängerung 34 einstückig mit dem Auslass 6 verbunden ist. Abgezweigtes Wasser W verlässt den Fallrohrfilter A durch den Auslass 6, vorausgesetzt, dass die Sperrhülse 23 mit ihrem Durchgang 24 auf die Verlängerung 34 ausgerichtet ist (wie gezeigt).

Bei voller Ausrichtung des Durchgangs 24 mit der Verlängerung 34 wird die maximale Ausbeute an abgezweigtem Regenwasser erzielt. Abhängig davon, wie weit der Handgriff 9 in der Vertiefung 8 verstellt wird, wird der Durchgang 24 blendenartig gegenüber der Mündung der Verlängerung 34 verdreht, um den Durchgangsquerschnitt zunehmend abzudrosseln, und die Ausbeute zu verringern. Wird der Sperrabschnitt 25 vor die Mündung der Verlängerung 34 gestellt, dann wird kein Regenwasser abgezweigt.

In der Sperrhülse 23 sind beispielsweise der Durchgang 24 und der Sperrabschnitt 25 innerhalb eines Umfangsbereiches von ca. 60° angeordnet. Der Handgriff 9 lässt sich in der Vertiefung 8 gerade über diese 60° verdrehen, um die Ausbeute zwischen Null und Maximal verstellen zu können.

Fig. 4 verdeutlicht ferner, dass innerhalb des Stülprandes 15 des oberen Gehäuseteils 13 die kreisrunde Fassung 35 für das obere Ende 22 des Gehäusezwischenabschnittes 5 und auch für den Halteflansch 30 der Auffangwanne 27 gebildet ist. Ähnlich ist die kreisrunde Fassung 19 im unteren Gehäuseteil 4 für das untere Ende 21 des Gehäusezwischenabschnitts 5 gebildet, wobei das Ende 21 auf den Rippen 18 aufstehen kann, oder diese sogar hintergreift.

Fig. 4 zeigt ferner, dass der Filter- oder Siebkörper 31 auf dem Rand der Auffangwanne 27 verschnappt ist, und mit einem höher liegenden Endflansch innen am Gehäuseteil 3 im Einsteckkasten 11 ansteht, so dass keine Verunreinigungen in die Auffangwanne 27 eintreten können, und die Auffangwanne 27 ihre Montierposition einhält.

Die Sperrhülse 23 sitzt mit einem Außenflansch auf dem oberen Rand des an der Verlängerung 34 angeformten Behälters 33 auf. Der Behälter 33 ist in etwa zentrisch beispielsweise auf Querstreben 36 des Gehäusezwischenabschnitts A abgestützt. In der in Fig. 4 gezeigten Betriebsstellung ist der Durchgang 24 auf die Verlängerung 34 ausgerichtet (maximale Ausbeute).

Gegebenenfalls sind in den Fassungen 35 und 19 Dichtungen vorgesehen. Die Handhabe 26 könnte auch direkt durch einen im Gehäusezwischenabschnitt 5 gebildeten Horizontalschlitz (nicht gezeigt) nach außen ragen, oder hinter einer zu öffnenden Klappe verborgen sein. Ferner könnte zwischen dem Gehäusezwischenabschnitt 5 und den Gehäuseteilen 3, 4 jeweils eine Schnapp- oder Rastverbindung vorgesehen sein, um ein unerwünschtes Öffnen des Gehäuses auszuschließen. Alternativ könnten sogar lösbare Befestigungselemente für diesen Zweck verwendet werden.

In Fig. 5 ist erkennbar, wie der Montieranschluss S1 direkt auf die Siebfläche 32 zielt und die rechte Endwand des Einsteckkastens 11 in etwa mit dem Außenumriss des Gehäuses abschließt oder über diesen geringfügig nach außen tritt. Auf den als Rohrstutzen ausgebildeten Auslass 6, der mit umfänglichen Außenrippen versehen ist, kann ein Schlauch oder Rohr aufgesteckt werden, um die Überströmverbindung zum Wassersammelbehälter herzustellen.

Bei einer nicht gezeigten Ausführungsform ist das gesamte Gehäuse relativ zu den Montieranschlüssen S1, S2 verdrehbar, wobei das Gehäuse einstückig ausgebildet sein könnte, oder aus zwei miteinander verbundenen Gehäusehälften besteht. Dieses Gehäuse wird dann zum Einstellen der Drehposition des Auslasses 6 sozusagen um die Fallrohrachse relativ zu den Fallrohrenden 1, 2 verdreht.

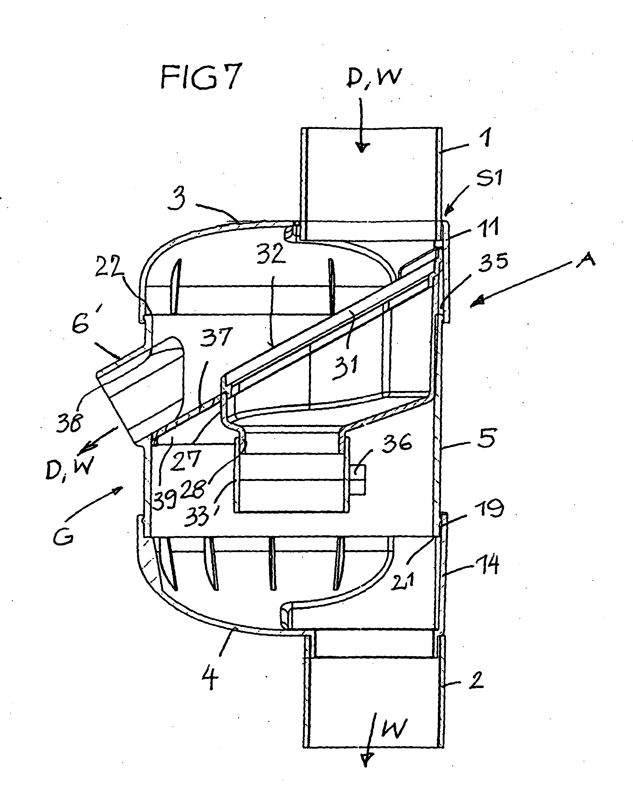

Die in einem viereckigen Fallrohrstrang zum Abscheiden von Laub und anderen gröberen Verunreinigungen dienende Ausführungsform des Fallrohrfilters A in den Fig. 6 und 7 ist beispielsweise dann zweckmäßig, wenn Regenwasser aus dem Fallrohr in eine Versickerungsanlage eingeleitet wird. Diese Ausführungsform unterscheidet sich von der der Fig. 1 bis 5 dadurch, dass der Gehäusezwischenabschnitt 5 z.B. mit einem größeren bzw. anderen Auslass 6' als der Auslass 6 versehen und im Gehäusezwischenabschnitt 5 ein zum Auslass 6' führender schräger Leitkörper 37 vorgesehen sind, der sich um die Auffangwanne 27 erstreckt, verhindert, dass von der Sieb- oder Filterfläche 32 abgespülte gröbere Verunreinigungen und Laub zum viereckigen Fallrohrende 2 gelangen, und der das abgeschiedene Laub aus dem Auslass 6' spülen lässt.

Der Gehäusezwischenabschnitt 5 in den Fig. 6 und 7 ist im Wesentlichen gleich dimensioniert wie der Gehäuseabschnitt 5 in den Fig. 1 bis 5, könnte jedoch auch länger oder kürzer als der Gehäuseabschnitt 5 in den Fig. 1 bis 5 sein. Die oberen und unteren Enden 21, 22 des Gehäusezwischenabschnitts 5 passen in die kreisrunden Fassungen 35 bzw. 39 der oberen und unteren, wiederum als Kappen ausgebildeten Gehäuseteile 3, 4. Die in das Gehäuse eingesetzte Auffangwanne 27 kann der Auffangwanne 27 der Fig. 1 bis 5 entsprechen, wie auch der Sieb- oder Filterkörper 31 mit seiner Sieb- oder Filterfläche 32. Die Auffangwanne 27 und der Siebkörper 31 werden wie in den Fig. 1 bis 5 in ihren Montierpositionen im oberen Gehäuseteil 3 verdrehgesichert. Das untere Auslassende 28 der Auffangwanne 27 ist in einen Rohrstutzen 33' von oben eingesteckt, der zentrisch im Gehäusezwischenabschnitt 5 vorgesehen ist, beispielsweise auf Querstegen 36. Das untere Ende des Rohrstutzens 33' mündet zum unteren Gehäuseteil 4.

Der Leitkörper 37 verläuft zweckmäßig im Wesentlichen so schräg wie der abfallende Öffnungsrand der Auffangwanne 27 und überbrückt den Zwischenraum zwischen der Wand des Gehäusezwischenabschnitts 5 und der Auffangwanne 27 bis zu einer Durchgangsöffnung 38 in der Wand des Gehäusezwischenabschnitts 5. Die Durchgangsöffnung 38 wird von dem Auslass 6' umgeben, der beispielsweise eine flachliegende rechteckige oder ovale Form hat. Die Durchgangsöffnung 38 und der Auslass 6' sind zweckmäßig mit einer Querschnittsgröße ausgebildet, die es ermöglicht, mit der menschlichen Hand von außen bis auf die Siebfläche 32 zu greifen.

In der gezeigten Ausführungsform in den Fig. 6 und 7 ist der Leitkörper 37, z.B. mit einer die Wand des Gehäusezwischenabschnitts 5 kontaktierenden unteren Schürze 39, an der Auffangwanne 27 angeformt. Der Leitkörper 37 könnte auch auf die Auffangwanne 27 so aufgesteckt sein, dass sich der Gehäusezwischenabschnitt 5 relativ zu den oberen und unteren Gehäuseteilen 3, 4 um die Gehäuseachse X verdrehen lässt, um den Auslass 6' unabhängig von der Installationsposition des viereckigen Fallrohres in eine gewünschte Drehposition einzustellen.

Bei Einsatz des in den Fig. 6 und 7 gezeigten Fallrohrfilters A strömt durch das obere Fallrohrende 1 Regenwasser W vermischt mit Verunreinigungen, insbesondere Laub D, auf die Siebfläche 32. Gröbere Verunreinigungen und das Laub werden zurückgehalten und über die schräge Siebfläche 32 auf den schrägen Leitkörper 37 gespült, ehe sie durch den Auslass 6' nach außen abfließen. Durch die Siebfläche 32 hindurchgegangenes, gereinigtes Regenwasser W wird von der Auffangwanne 27 durch den Rohrstutzen 33' in den unteren Gehäuseteil 4 und von dort in das untere Fallrohrende 2 geleitet, von wo es beispielsweise einer Versickerungsanlage zugeführt wird. Bei der Laubabscheidung ist ggfs. die Drehposition des Auslasses 6' eher nebensächlich, da z.B. das Laub auf dem Boden geleitet wird, oder reicht ein begrenzter Drehbereich des Auslasses 6' aus.

Der Fallrohrfilter A kann zwischen den beiden Ausführungsformen umgebaut werden, indem beispielsweise ein Fallrohrende 1 oder 2 axial weggeschoben und dann die oberen und unteren Gehäuseteile 3, 4 von dem bis dahin verwendeten Gehäusezwischenabschnitt 5 getrennt werden. Dann wird der bis dahin verwendete Gehäusezwischenabschnitt 5 gegen den anderen Gehäusezwischenabschnitt 5 getauscht (entweder zum Abzweigen von Regenwasser oder zum Laubabscheiden), und wird dieser Gehäusezwischenabschnitt 5 wieder mit den oberen und unteren Gehäuseteilen 3, 4 verbunden, ehe das weggeschobene Fallrohrende in die Ausgangsposition zurückgestellt wird. Alternativ ist es möglich, den fertig vorinstallierten Fallrohrfilter A für die eine oder die andere Funktion (entweder Regenwasserabzweigung oder Laubabscheidung) komplett gegen den anderen Regenwasserfilter A (für die Laubabscheidung oder die Regenwasserabzweigung) zu ersetzen.

Der Leitkörper 37 könnte alternativ (z.B. ohne Schürze 39) mit dem Gehäusezwischenabschnitt verbunden sein und einen dann zur Gehäuseachse X zentrischen, runden Unterteil der Auffangwanne 27 drehbar umfassen (nicht gezeigt). Ferner wäre es möglich, zusammenwirkende Teile des Leitkörpers 37 am Gehäusezwischenabschnitt 5 und der Auffangwanne 27 anzuordnen (nicht gezeigt).

## Patentansprüche

1. Fallrohrfilter (A), mit einem in einer Fallrohrunterbrechung zwischen Fallrohrenden (1, 2) montierbaren Gehäuse (G), das einen quer zur Fallrohrachse nach außen orientierten Auslass (6, 6') aufweist, und in dem innen eine Siebvorrichtung (32) und eine Auffangwanne (27) untergebracht sind, wobei das Gehäuse (G) obere und untere, eine Gehäuseachse (X) definierende Gehäuseteile (3, 4) jeweils mit einem Montageanschluss (S1, S2) für ein viereckiges Fallrohrende (1, 2) sowie einen Gehäusezwischenab- (5) schnitt (5) aufweist, an dem der Auslass (6, 6') vorgesehen ist, **dadurch gekennzeichnet, dass** der Gehäusezwischenabschnitt (5) relativ zu den Gehäuseteilen (3, 4) im Wesentlichen um die Gehäuseachse (X) verdrehbar ist.

2. Fallrohrfilter nach Anspruch 1, **dadurch gekennzeichnet, dass** das Gehäuse (G) einen im Wesentlichen kreisrunden Außenumriss besitzt, dessen Mittelachse die Gehäuseachse (X) ist, und dass die im Wesentlichen fluchtenden Montageanschlüsse (S1, S2) gegenüber der Gehäuseachse (X) außermittig angeordnet, vorzugsweise bis innen oder außen angrenzend an den Außenumriss nach außen versetzt sind.

3. Fallrohrfilter nach Anspruch 1, **dadurch gekennzeichnet, dass** der obere bzw. untere Gehäuseteil (3, 4) als Kappe mit einem integrierten viereckigen, außen liegenden Einsteckkasten (11, 14) für das Fallrohrende (1, 2) und einer innen liegenden, kreisrunden Fassung (35, 19) für ein Ende (21, 22) des Gehäusezwischenabschnitts (5) ausgebildet ist, und dass der Gehäusezwischenabschnitt (5) kreisrunde Enden (21, 22) besitzt und, vorzugsweise, zwischen den Enden (21, 22) im Wesentlichen zylindrisch ist.

4. Fallrohrfilter nach Anspruch 3, **dadurch gekennzeichnet, dass** zwischen den oberen und unteren Gehäuseteilen (3, 4) der Gehäusezwischenabschnitt (5) entweder zum Abzweigen von Regenwasser (W) oder zum Abscheiden vorwiegend von Laub (D) über den Auslass. (6, 6') nach außen vorgesehen ist, und dass, vorzugsweise der jeweilige Gehäusezwischenabschnitt (5) wahlweise zwischen dieselben oberen und untere Gehäuseteile (3, 4) einsetzbar ist.

5. Fallrohrfilter nach Anspruch 3, **dadurch gekennzeichnet, dass** der Einsteckkasten (11, 14) als zur Anpassung an unterschiedliche Fallrohrgrößen wählbar umbaubarer Adapter ausgebildet ist, vorzugsweise mittels in einen in Maximalgröße mit innen liegenden Leitwänden (17) ausgebildeten Schacht (12, 12a) einsetzbarer oder entnehmbarer Adapterteile (13).

6. Fallrohrfilter nach Anspruch 1, **dadurch gekennzeichnet, dass** der Auslass (6) ein im Wesentlichen zur Gehäuseachse (X) senkrechter, von außen bis ins Innere des Gehäusezwischenabschnitts (5) zum Abzweigen von Wasser (W) und dort bis zu einem oben offenen Behälter (33) verlängerter Rohrstutzen ist, dass ein Bodenauslass (28) der Auffangwanne (27) in dem Behälter (33) drehbar aufgenommen ist, und dass der Behälter (33) im Gehäusezwischenabschnitt (5) in etwa zentrisch positioniert ist, vorzugsweise auf wenigstens einer Querstrebe (36) des Gehäusezwischenabschnitts (5).

7. Fallrohrfilter nach Anspruch 3, **dadurch gekennzeichnet, dass** die Auffangwanne (27) einen Halteflansch (30) aufweist, der im Bereich der Fassung (35) zwischen dem oberen Gehäuseteil (3) und dem Gehäusezwischenabschnitt (5) positioniert ist und die Auffangwanne im oberen Gehäuseteil (3) gegen Verdrehen sichert.

8. Fallrohrfilter nach Anspruch 6, **dadurch gekennzeichnet, dass** zwischen dem Bodenauslass (28) der Auffangwanne (27) und dem Behälter (33) eine um die Gehäuseachse (X) drehbare Absperrhülse (23) eingesetzt ist.

9. Fallrohrfilter nach Anspruch 8, **dadurch gekennzeichnet, dass** die Absperrhülse (23) in Umfangsrichtung aufeinanderfolgend wenigstens einen Absperrabschnitt (25) und wenigstens einen Durchgang (24) sowie eine nach außen ragende, vorzugsweise von außerhalb greifbare, Handhabe (26) aufweist.

10. Fallrohrfilter nach Anspruch 9, **dadurch gekennzeichnet, dass** im Außenumriss des Gehäusezwischenabschnitts (5) eine in Umfangsrichtung begrenzte, unterseitig offene Vertiefung (8) eingeformt ist, und dass die Handhabe (22) mit einem nach oben ragenden Handgriff (9) von unten bis in die Vertiefung (8) eingreift, der an der Außenseite des Gehäusezwischenabschnitts (5) zugänglich positioniert ist.

11. Fallrohrfilter nach Anspruch 9, **dadurch gekennzeichnet, dass** der Durchgang (24) und der Absperrabschnitt (25) in Umfangsrichtung innerhalb von etwa 60° liegen, und dass der Handgriff (9) in der Vertiefung (8) über etwa 60° um die Gehäuseachse (X) verdrehbar ist.

12. Fallrohrfilter nach Anspruch 3, **dadurch gekennzeichnet, dass** zumindest die den unteren Gehäuseteil (4) bildende Kappe die Fassung (19) begrenzende Rippen (18) aufweist.

13. Fallrohrfilter nach Anspruch 1, **dadurch gekennzeichnet, dass** die Auffangwanne (27) einen bis zum Halteflansch (30) schräg ansteigenden Öffnungsrand (29) aufweist, und dass auf den Öffnungsrand (29) ein in Form und Größe dem Öffnungsrand weitgehend entsprechender Sieb- oder Filterkörper (31) aufgesetzt und auf dem Öffnungsrand entnehmbar positioniert ist.

14. Fallrohrfilter nach Anspruch 4, **dadurch gekennzeichnet, dass** in den Gehäusezwischenabschnitt (5) zum Abscheiden vorwiegend von Laub (D) der Auslass (6') ein, vorzugsweise, relativ zur Gehäuseachse (X) schräg abfallender Rohrstutzen um eine Durchgangsöffnung (38) der Wand des Gehäusezwischenabschnitts (5) ist, und dass im Gehäusezwischenabschnitt (5), vorzugsweise mit in etwa der Schräge eines öffnungsrandes (29) der Auffangwanne (27), ein den Zwischenraum zwischen der Wand des Gehäusezwischenabschnitts (5) und der Auffangwanne (27) überbrückender, schräger Leitkörper (37) zur Durchgangsöffnung (38) vorgesehen ist.

15. Fallrohrfilter nach Anspruch 14, **dadurch gekennzeichnet, dass** zumindest ein Teil des Leitkörpers (37) im Gehäusezwischenabschnitt (5) angebracht ist.

16. Fallrohrfilter nach Anspruch 14, **dadurch gekennzeichnet, dass** zumindest ein Teil des Leitkörpers (37) an der Auffangwanne (27) angebracht ist.

17. Fallrohrfilter nach Anspruch 14, **dadurch gekennzeichnet, dass** die Durchgangsöffnung (38) in Querrichtung weiter ist als in Hochrichtung, vorzugsweise mit einer Querschnittsgröße größer als die einer menschlichen Hand.

18. Fallrohrfilter nach Anspruch 14, **dadurch gekennzeichnet, dass** ein Bodenauslass (28) der Auffangwanne (27), vorzugsweise drehbar, in einem zentrisch im Gehäusezwischenabschnitt (5), vorzugsweise auf wenigstens einer Querstrebe (36), abgestützten Rohrstutzen (33') aufgenommen ist.

19. Fallrohrfilter nach wenigstens einem der vorhergehenden Ansprüche, **dadurch gekennzeichnet, dass** die Komponenten des Fallrohrfilters (A) Kunststoff-Spritzgussteile sind.

## Claims

1. Downpipe filter (A), comprising a housing (G) which is to be mounted in a downpipe break between downpipe ends (1, 2), the housing (G) having an outlet (6) for branched-off water (W), which outlet (6, 6') is oriented outwardly and laterally to the downpipe axis (X), the housing (G) receiving an inner sieve device (32) and a collecting trough (27), the housing (G) comprising upper and lower housing parts (3, 4) defining a housing axis (X), each housing part (3, 4) having a mounting port (S1, S2) for a quadrangular downpipe end (1, 2), and a housing intermediate section (5) at which the outlet (6, 6') is provided, **characterised in that** the housing intermediate section (5) is rotatable in relation to the housing part (3, 4) substantially about the housing axis (X).

2. Downpipe filter according to claim 1, **characterised in that** the housing (G) has a substantially circular outer contour, that the central axis of the outer contour is the housing axis (X), and that the mounting ports (S1, S2) which are substantially aligned to each other, are arranged out of centre in relation to the housing axis (X), preferably are offset outwardly such that they lie adjacent to the outer housing contour from the inner side or the outer side.

3. Downpipe filter according to claim 1, **characterised in that** the upper and lower housing parts (3, 4) are formed as caps, each cap having an integrated quadrangular, exteriorly placed insertion box (11, 14) for one downpipe end (1, 2) and an interiorly placed, circular socket (35, 19) for one downpipe end (1, 2) circular socket (35, 19) for one end (21, 22) of the housing intermediate section (5), and that the housing intermediate section (5) has circular ends (21, 22) and is, preferably, substantially cylindrical between the ends (21, 22).

4. Downpipe filter according to claim 3, **characterised in that** a housing intermediate section (5) designed either for branching-off rainwater (W) or for removing mainly foliage (D), outwardly via the outlet (6, 6') is provided between the upper and lower housing parts (3, 4), and that, preferably, a respective housing intermediate section (5) is inserted selectively between the same upper and lower housing parts (3, 4).

5. Downpipe filter according to claim 3, **characterised in that** the respective insertion box (11, 14) is formed as a selectively modifiable adaptor for adaptation to different downpipe sizes, preferably by means of adaptor parts (13) provided for being inserted into or removed from a respective shaft (12, 12a) which has a maximum downpipe size and interiorly located guided walls (17).

6. Downpipe filter according to claim 1, **characterised in that** the outlet (6) is a tube socket which extends substantially perpendicular with respect to the housing axis (X) from the outer side into the interior of the housing intermediate section (5) and there to a container (33) which is open at the upper side, that a bottom outlet (28) of the collecting trough (27) is rotatably received in the container (33), and that the container (33) is positioned substantially centrally in the housing intermediate section (5), preferably on at least one lateral strut (36) of the housing intermediate section (5).

7. Downpipe filter according to claim 3, **characterised in that** the collecting trough (27) has a holding flange (30), which is positioned in the region of the socket (35) between the upper housing part (3) and the housing intermediate section (5) and hinders the collecting trough (27) against rotation in the upper housing part (3).

8. Downpipe filter according to claim 6, **characterised in that** a blocking sleeve (23) is inserted between the bottom outlet (28) of the collecting trough (27) and the container (33), and that the blocking sleeve (23) is rotatable about the housing axis (X).

9. Downpipe filter according to claim 8, **characterised in that** the blocking sleeve (23) is provided with at least one blocking section (25) and at least one passage (24), which are arranged behind each other in circumferential direction, and that a handle (26) on the blocking sleeve (23) which protrudes to the outer side, and, preferably, can be gripped from the outer side.

10. Downpipe filter according to claim 9, **characterised in that** a recess (8) is formed in the outer contour of the housing intermediate section (5), that the recess is open at the lower side and is limited in circumferential direction, and that the handle (22) engages with a grip (9) from the lower side into the recess (8), the grip (9) being positioned for access from outside at the outer side of the housing intermediate section (5).

11. Downpipe filter according to claim 9, **characterised in that** the passage (24) and the blocking section (25) are situated in circumferential direction within about 60°, and that the grip portion (9) is rotatable about the recess (8) over about 60° about the housing axis (X).

12. Downpipe filter according to claim 3, **characterised in that** at least the cap defining the lower housing part comprises ribs (18) bounding the socket (19).

13. Downpipe filter according to claim 1, **characterised in that** the collecting trough (27) comprises an opening edge (29) which extends obliquely upwards toward the holding flange (30), and that a sieve body or a filter body is placed in removable fashion on the opening edge (29), the shape and size of the sieve body or filter body (31) largely corresponding to the shape and size of the opening edge (29).

14. Downpipe filter according to claim 4, **characterised in that** for removing predominantly foliage (D), the outlet (6, 6') in the housing intermediate section (5) is designed, preferably, as a tube socket that is inclined obliquely downwardly in relation to the housing axis (X) and which surrounds a passage opening (38) of the wall of the housing intermediate section (5), and that an inclined guiding body (37) extending to the passage opening (38) is provided in the housing intermediate section (5), to bridge the intermediate space between the wall of the housing intermediate section (5) and the collecting trough (27), the guiding body (37), preferably being inclined substantially with the same inclination as an opening edge (29) of the collecting trough (27).

15. Downpipe filter according to claim 14, **characterised in that** at least a part of the guiding body (37) is arranged in the housing intermediate section (5).

16. Downpipe filter according to claim 14, **characterised in that** at least a part of the guiding body (37) is provided at the collecting trough (27).

17. Downpipe filter according to claim 14, **characterised in that** the passage opening (38) is wider in lateral direction than in the vertical direction, and preferably has a cross-section area that is larger than a human hand.

18. Downpipe filter according to claim 14, **characterised in that** a bottom outlet (28) of the collecting trough (27) is received, preferably rotatably, in a tube socket (33, 33') which is supported centrally in the housing intermediate section (5), preferably, on at least one lateral strut (36).

19. Downpipe filter according to at least one of the preceding claims, **characterised in that** the components of the downpipe filter (A) are plastic material injection moulded parts.

## Revendications

1. Filtre (A) pour tuyau de descente, comprenant un boîtier (G) destiné à être monte une ouverture ménagée dans un tuyau de descente, entre des extrémités (1, 2) du tuyau de descente, le boîtier (G) ayant une sortie (6) pour de l'eau interceptée (W), laquelle sortie (6) est orientée vers l'extérieur et latéralement par rapport à un axe du tuyau de descente. le boîtier (G) recevant un dispositif de tamis intérieur (32) et un bac collecteur (27), le boîtier (G) comprend des parties supérieure et inférieure (3, 4) de boîtier définissant un axe (X) du boîtier, chaque partie (3, 4) de boîtier ayant un orifice de montage (S1, S2) pour une extrémité (1, 2) de tuyau de descente quadrangulaire, et en ce que le boîtier (G) comporte une portion intermédiaire (5) de boîtier dans laquelle la sortie (6) est ménagée, **caractérisé en ce que** ladite portion intermédiaire (5) de boîtier pouvant tourner par rapport à la partie (3, 4) de boîtier sensiblement autour de l'axe (X) du boîtier.

2. Filtre pour tuyau de descente selon la revendication 1, **caractérisé en ce que** le boîtier (G) a un pourtour extérieur sensiblement circulaire, **en ce que** l'axe central du pourtour extérieur est l'axe (X) du boîtier et **en ce que** les orifices de montage (S1, S2) qui sont sensiblement alignes l'un avec l'autre sont décentrés par rapport a l'axe (X) du boîtier, de préférence sont décalés vers l'extérieur afin d'être adjacent au pourtour extérieur du boîtier, par rapport au côté intérieur ou au côté extérieur.

3. Filtre pour tuyau de descente selon la revendication 1, **caractérisé en ce que** les parties supérieure et inférieure (3, 4) de boîtier constituent des capots, chaque capot ayant un caisson (11, 14) d'insertion intégré, quadrangulaire, placé a l'extérieur, pour une extrémité (1, 2) du tuyau de descente, et un logement circulaire (35, 19), placé à l'intérieur, pour une extrémité (21, 22) de la portion intermédiaire (5) de boîtier, et **en ce que** la portion intermédiaire (5) de boîtier a des extrémités circulaires (21, 22) et, de préférence, est sensiblement cylindrique entre les extrémités (21, 22).

4. Filtre pour tuyau de descente selon la revendication 3, **caractérisé en ce que** la portion intermédiaire (5) de boîtier conçue soit pour dériver des eaux de pluie (W) soit pour éliminer principalement un feuillage (D) vers l'extérieur par la sortie (6, 6') est disposée entre les parties supérieure et inférieure (3, 4) de boîtier, et **en ce que**, de préférence, une portion intermédiaire respective (5) de boîtier est insérée de manière sélective entre lesdites parties supérieure et inférieure (3, 4) de boîtier.

5. Filtre pour tuyau de descente selon la revendication 3, **caractérisé en ce que** le caisson (11. 14) d'insertion respectif se présente sous la forme d'un adaptateur modifiable à volonté pour une adaptation à différentes dimensions du tuyau de descente, de préférence à l'aide de pièces d'adaptation (13) destinées à être insérées dans ou retirées d'une colonne respective (12, 12a) qui a les dimensions maximales du tuyau de descente et qui comporte des parois de guidage (17) situées a l'intérieur.

6. Filtre pour tuyau de descente selon la revendication 1, **caractérisé en ce que** la sortie (6) est une douille tubulaire qui s'étend sensiblement perpendiculairement à l'axe (X) du boîtier, depuis le cote extérieur vers l'intérieur de la portion intermédiaire (5) de boîtier, et, à cet endroit, jusqu'à un récipient (33) qui est ouvert du côté supérieur, **en ce qu'**une sortie (28) inférieure du bac collecteur (27) est reçue de manière a pouvoir tourner dans le récipient (33), et **en ce que** le récipient (33) est placé en position sensiblement centrale dans la portion intermédiaire (5) de boîtier, de préférence sur au moins un support latéral (36) de la portion intermédiaire (5) de boîtier.

7. Filtre pour tuyau de descente selon la revendication 3, **caractérisé en ce que** le bac collecteur (27) comporte un rebord de maintien (30), qui est placé dans une région du logement (35) entre la partie supérieure (3) de boîtier et la portion intermédiaire (5) de boîtier, et qui empêche le bac collecteur (27) de tourner dans la partie supérieure (3) de boîtier.

8. Filtre pour tuyau de descente selon la revendication 6, **caractérisé en ce qu'**un manchon de blocage (23 est inséré entre la sortie (28) inférieure du bac collecteur (27) et le récipient (33), et **en ce que** le manchon de blocage (23) peut tourner autour de l'axe (X) du boîtier.

9. Filtre pour tuyau de descente selon la revendication 8, **caractérisé en ce que** le manchon de blocage (23) est pourvu d'au moins une section de blocage (25) et d'au moins un passage (24), qui sont disposés l'un derrière l'autre dans la direction circonférentielle, et **en ce qu'**une poignée (26) est placée sur le manchon de blocage (23), laquelle poignée dépasse du côté extérieur, et, de préférence, peut être saisie depuis le côté extérieur.

10. Filtre pour tuyau de descente selon la revendication 9, **caractérisé en ce qu'**un évidement (8) est formé dans le pourtour extérieur de la portion intermédiaire (5) de boîtier, **en ce que** l'évidement est ouvert du côté inférieur et est limité dans la direction circonférentielle, et **en ce que** la poignée (26) engage l'évidement (8) avec une prise (9) par le côté inférieur, la prise(9) étant placée de manière à être accessible de l'extérieur, du côté extérieur de la intermédiaire (5) de boîtier.

11. Filtre pour tuyau de descente selon la revendication 9, **caractérisé en ce que** le (24) et le moyen d'arrêt (25) sont situés dans la direction circonférentielle dans environ 60°, et **en ce que** la prise (9) peut tourner l'évidement (8) sur environ 60° autour de l'axe (X) du boîtier.

12. Filtre pour tuyau de descente selon la revendication 3, **caractérisé en ce qu'**au moins un capot définissant la partie inférieure de boîtier comporte des nervures (18) délimitant le logement (19).

13. Filtre pour tuyau de descente selon la revendication 1, **caractérisé en ce que** le bac collecteur (27) comporte un bord (29) d'ouverture qui prolonge de manière oblique vers le haut vers un rebord de maintien (30), et **en ce qu'**un corps de tamis ou un corps de filtre est placé de manière amovible sur le bord (29) d'ouverture, la forme et les dimensions du corps de tamis ou du corps (31) de filtre correspondant en grande partie à la forme et aux dimensions du bord (29) d'ouverture.

14. Filtre pour tuyau de descente selon la revendication 4, **caractérisé en ce que**, pour éliminer principalement le feuillage (D), la sortie (6') dans la portion intermédiaire (5) de boîtier est conçue, de préférence, sous la forme d'une douille tubulaire qui est incliné de manière oblique vers le bas par rapport à l'axe (X) du boîtier et qui entoure une ouverture (38) de passage dans la paroi de la portion intermédiaire (5) de boîtier, et **en ce qu'**un corps de guidage incliné (37) s'étendant jusqu'a l'ouverture (38) de passage est présent dans la portion intermédiaire (5) de boîtier pour enjamber un espace intermédiaire entre la paroi de la portion intermédiaire (5) de boîtier et le bac collecteur (27), le corps de guidage (37) étant de préférence incliné avec sensiblement la même inclinaison qu'un bord (29) d'ouverture du bac collecteur (27).

15. Filtre pour tuyau de descente selon la revendication 14, **caractérisé en ce qu'**au moins une partie du corps de guidage (37) est prévue dans la portion intermédiaire (5) de boîtier.

16. Filtre pour tuyau de descente selon la revendication 14, **caractérisé en ce qu'**au moins une partie du corps de guidage (37) est prévue au niveau du bac collecteur (27).

17. Filtre pour tuyau de descente selon la revendication 14, **caractérisé en ce que** l'ouverture (38) de passage est plus large dans la direction latérale que dans la direction verticale et, de préférence, a une section transversale plus grande qu'une main humaine.

18. Filtre pour tuyau de descente selon la revendication 14, **caractérisé en ce qu'**une sortie inférieure (28) du bac collecteur (27) est reçue, de préférence de manière rotative, dans une douille tubulaire (33') qui est supporté en position centrale dans la portion intermédiaire (5) de boîtier, de préférence sur au moins un support latérale (36),

19. Filtre pour tuyau de descente selon au moins une des revendications précédentes, **caractérisé en ce que** les composants du filtre (A) pour tuyau de descente sont des pièces en matière plastique moulée par injection.
